# EUROPÄISCHE PATENTSCHRIFT

(11) **EP 2 643 072 B1**
(45) Veröffentlichungstag und Bekanntmachung des Hinweises auf die Patenterteilung: **29.12.2021**
(21) Anmeldenummer: 11791205.5
(22) Anmeldetag: 16.11.2011
(51) Int. Cl.: B01D 53/04

(54) **FILTERVORRICHTUNG UND VERFAHREN ZUR REINIGUNG EINES GASSTROMS**
FILTER APPARATUS AND METHOD FOR PURIFYING A GAS FLOW
DISPOSITIF DE FILTRATION ET PROCÉDÉ DE NETTOYAGE D'UN COURANT DE GAZ

(30) Priorität: 24.11.2010 DE 102010052461
(43) Veröffentlichungstag der Anmeldung: 02.10.2013
(73) Patentinhaber: Eisenmann SE, 71032 Böblingen (DE)
(72) Erfinder: KUGLER, Markus, 72076 Tübingen (DE); RAUSER, Wolfgang, 72224 Ebhausen (DE)
(74) Vertreter: Ostertag & Partner Patentanwälte mbB
(86) Internationale Anmeldenummer: PCT/EP2011/005756
(87) Internationale Veröffentlichungsnummer: WO 2012/069156

(56) Entgegenhaltungen:
- EP-A1- 0 450 888
- EP-A1- 0 492 169
- EP-A1- 0 626 244
- EP-A2- 0 740 956
- EP-A2- 1 321 177
- DE-A1- 3 100 788
- DE-A1- 19 823 611
- US-A- 3 368 327
- US-A- 4 391 616
- US-A- 5 227 598
- US-A- 5 308 457
- US-A- 5 879 432
- US-A1- 2006 096 454

## Beschreibung

Die Erfindung betrifft ein Verfahren zur Reinigung eines in einem Kreislauf geführten Gasstroms, insbesondere eines Luftstroms, bei welchem der Gasstrom durch wenigstens eine Filterstufe geführt wird, bei dem als wenigstens eine Filterstufe eine Adsorptionsfiltereinrichtung mit einem Filtermedium verwendet wird, welches den Gasstrom durchströmt.

Ein Verfahren zur Reinigung eines in einem Kreislauf geführten Gasstromes ist beispielsweise aus der US 5,879,432 A bekannt, wobei dort Filtereinheiten lediglich nebeneinander angeordnet sind.

Beispielsweise werden in der Automobilindustrie Filtervorrichtungen dazu verwendet, Abluft von Verunreinigungen zu befreien, die sowohl Feststoffe als auch gasförmige Verbindungen umfassen kann. Die Adsorptionsfiltereinheit dient dazu, die Abluft von den gasförmigen Verunreinigungen, insbesondere von flüchtigen organischen Verbindungen, zu befreien.

Eine solche Adsorptionsfiltereinheit ist beispielsweise aus der DE 699 32 398 T2 bekannt. Dort ist ein Adsorbens mit einem Katalysator vermischt, so dass die aufgenommenen Verunreinigungen oberhalb einer bestimmten Temperatur einerseits wieder desorbiert und andererseits im Filter in einer katalytischen Reaktion in unbedenkliche Verbindungen wie Wasser und Kohlendioxid umgewandelt werden.

Bei vom Markt her bekannten Filtereinrichtungen, die ohne Katalysator arbeiten, werden die desorbierten Verunreinigungen abgeführt und an einer von der Filtervorrichtung entfernten Stelle aufbereitet.

Es gibt z.B. derartige Filtereinrichtungen, bei denen das Filtermedium vor einer Regenerationseinrichtung verdreht werden kann, so dass immer ein Abschnitt des Filtermediums an der Regenerationseinrichtung vorbeigeführt wird. Der entsprechende Abschnitt des Filtermediums wird zur Regeneration mit heißer Desorptionsluft durchströmt, durch welche das Filtermedium in dem entsprechenden Abschnitt auf eine Desorptionstemperatur gebracht wird und die aufgenommenen Verunreinigungen abgibt. Die desorbierten Verunreinigungen werden von dem Luftstrom mitgerissen und dadurch abgeführt.

Bei dieser Anordnung besteht jedoch einerseits die Gefahr, dass Falschluft aus Abschnitten, die dem zu reinigenden Abschnitt des Filtermediums benachbart sind, zur Desorptionsluft gelangt. Hierdurch können sich das Desorptionsergebnis und damit die Regenerationswirkung verschlechtern.

Andererseits, und dies stellt ein gravierenderes Problem im Hinblick auf die Güte der erhaltenen Reinluft dar, kann jedoch auch Desorptionsluft, die mit desorbierten Verunreinigungen beladen ist, zur Reinluft gelangen, die dann kontaminiert ist. Aus diesem Grund werden bekannte Adsorptionsfilter nicht verwendet, wenn die gereinigte Luft in einem Kreislauf wieder ihrer Ausgangsbestimmung zugeführt werden soll.

Beispielsweise wird in der Automobilindustrie Abluft von Verunreinigungen befreit, die bei der Oberflächenbehandlung von Fahrzeugkarosserien und dort insbesondere beim Lackieren und Trocknen derselben entsteht. Es ist seit langem üblich, die gereinigte Abluft in einem Kreislauf wieder als Reinluft in den vorhandenen Behandlungsraum zurückzuführen, um die Kosten möglichst gering zu halten.

Während für die Abtrennung von Feststoffpartikeln, Flüssigkeitströpfchen oder dispersen Systemen aus Abluft, die in einem Kreislauf wieder verwendet werden soll, viele Lösungen bekannt sind, bereitet dort insbesondere die Abtrennung der gasförmigen, insbesondere der bereits oben angesprochenen flüchtigen organischen Verbindungen, noch immer verhältnismäßig große Schwierigkeiten.

Es ist somit Aufgabe der Erfindung, ein Verfahren der eingangs genannten Art bereitzustellen, mit denen insbesondere die Trennung von gasförmigen Verunreinigungen aus einem Gastrom effektiv und sicher gewährleistet ist.

Diese Aufgabe wird durch ein Verfahren mit den Merkmalen des Anspruchs 1 gelöst.

Erfindungsgemäß umfassen die Regenerationseinheit eine Desorptionsfluid-Zuführeinheit und eine Desorptionsfluid-Abführeinheit, welche derart auf zwei Seiten eines Filtermoduls positionierbar sind, dass dieses zumindest bereichsweise von Desorptionsfluid durchströmt werden kann.

Erfindungsgemäß umfasst die Desorptionsfluid-Zuführeinheit einen verfahrbaren Desorptionsfluid-Auslassschlitten und die Desorptionsfluid-Abführeinheit einen verfahrbaren Desorptionsfluid-Einlassschlitten, welche derart auf gegenüberliegenden Seiten eines Filtermoduls positionierbar sind, dass Desorptionsfluid vom Desorptionsfluid-Auslassschlitten durch das Filtermodul zum Desorptionsfluid-Einlassschlitten strömt.

Insbesondere dadurch, dass jedes Filtermodul ein eigenes Gehäuse hat, kann das jeweils darin befindliche Filtermedium als abgeschlossene Einheit regeneriert werden, ohne dass die Gefahr besteht, dass Desorptionsluft, die bereits mit Verunreinigungen beladen ist, zur Reinluft gelangt. Zudem kann das Filter insgesamt kontinuierlich arbeiten, da durch die Regenerationseinrichtung Abschnitte des Filtermediums regeneriert werden können, während andere Abschnitte des Filtermediums noch als Adsorptionsfilter arbeiten.

Es ist besonders günstig, wenn die Filtermodule mittels der Regenerationseinheit von einem Desorptionsfluid durchströmt werden.

Gute Regenerationsergebnisse können erzielt werden, wenn das Desorptionsfluid konditionierte Luft ist, welche eine Temperatur hat, die ausreicht, um das Filtermedium auf Desorptionstemperatur zu bringen.

Ferner ist es günstig, wenn das Filtermedium ein Trägersubstrat umfasst, welches mit einem Adsorbens beschichtet ist.

Dabei kann das Filtermedium besonders gut aus einem band-oder folienartigen Trägersubstrat gebildet werden.

Vorteilhaft ist das Trägersubstrat aus einem Metall, insbesondere aus Aluminium.

Wenn das Trägersubstrat eine Wellenstruktur aufweist, können durch Faltung des band- oder folienartigen Trägersubstrats Kanäle in dem Filtermedium geschaffen werden, welche von dem zu reinigenden Gasstrom durchströmt werden können. Insgesamt ist dadurch die Wirkfläche des Filtermediums erhöht.

Besonders effektiv ist es dabei, wenn das Filtermedium in Form von wenigstens einem Filterblock vorliegt, der eine Vielzahl benachbarter Lagen aus dem Trägersubstrat umfasst. Wenn wenigstens ein Filterblock in einer Orientierung von einem Filtermodul umfasst ist, bei der die Lagen vertikal angeordnet sind, kann der Desorptionsvorgang als kontinuierlicher Prozess durchgeführt werden. Hierauf wird weiter unten nochmals näher eingegangen.

Alternativ kann es günstig sein, wenn wenigstens ein Filterblock in einer Orientierung von einem Filtermodul umfasst ist, bei der die Lagen horizontal angeordnet sind.

Wenn dann bei dem Filterblock durchgehende Trennschichten zwischen den Lagen aus dem Trägersubstrat angeordnet sind, ist auch bei dieser Orientierung des Filterblocks ein kontinuierlicher Desorptionsvorgang möglich. Auch hierauf wird weiter unten nochmals eingegangen.

Nachfolgend werden Ausführungsbeispiele der Erfindung anhand der Zeichnungen näher erläutert. In diesen zeigen:
- Figur 1: eine schematische perspektivische Ansicht einer Filtervorrichtung zum Filtern eines mit Verunreinigungen beladenen Gasstroms, bei der in einer letzten von mehreren Filterstufen eine Adsorptionsfiltereinheit vorhanden ist, die mit einer Desorptions-Regenerationseinrichtung zusammenarbeitet;
- Figur 2: die Adsorptionsfilterstufe der Filtervorrichtung von Figur 1 in größerem Maßstab;
- Figur 3: schematisch einen Aufbau zur Herstellung einer mit einem Adsorbens beschichteten gewellten Aluminium-folie, die zu einem Filtermedium gefaltet werden kann;
- Figur 4: schematisch einen Schnitt der mit Adsorbens beschichteten Aluminiumfolie;
- Figur 5: schematisch einen durch Faltung der mit Adsorbens beschichteten gewellten Aluminiumfolie erhaltenen Filterblock in einer ersten Raumorientierung, wobei lediglich zwei Lagen der Aluminiumfolie gezeigt sind;
- Figur 6: eine der Figur 5 entsprechende Darstellung eines Filterblocks in einer zweiten Raumorientierung, wobei zwischen zwei Lagen eine durchgehende Trennschicht vorhanden ist;
- Figur 7: einen Schnitt einer Filterwand gemäß einem ersten Ausführungsbeispiel mit einem Lufteinlass- und einem Luftauslassschlitten der DesorptionsRegenerationseinrichtung von Figur 1;
- Figur 8: eine Ausschnittsvergrößerung von Figur 7;
- Figur 9: einen Schnitt gemäß der gewinkelten Schnittlinie IX-IX in Figur 7;
- Figur 10: einen der Figur 9 entsprechenden Schnitt, wobei der Lufteinlass- und der Luftauslassschlitten in einer gegenüber Figur 9 anderen Position gezeigt sind;
- Figur 11: einen der Figur 9 entsprechenden Schnitt einer Filterwand gemäß einem zweiten Ausführungsbeispiel mit einem abgewandelten Lufteinlass- und einem abgewandelten Luftauslassschlitten;
- Figur 12: einen der Figur 11 entsprechenden Schnitt, wobei der Lufteinlass- und der Luftauslassschlitten in einer gegenüber Figur 11 anderen Position gezeigt sind.

In den Figuren ist mit 2 insgesamt eine Filtervorrichtung bezeichnet, welche dazu dient, einen mit Verunreinigungen beladenen Gasstrom von den Verunreinigungen zu befreien und dadurch zu reinigen.

Wie oben erwähnt, kann ein solcher zu reinigender Gasstrom beispielsweise durch Abluft gebildet sein, die bei der Oberflächenbehandlung von Fahrzeugkarosserien und dort insbesondere beim Lackieren und Trocknen derselben entsteht. Diese Abluft soll in einem Kreislauf aus dem Behandlungsraum, beispielsweise einem Lackier- oder Trockentunnel, abgeführt, von Verunreinigungen befreit und dem Behandlungsraum wieder zugeführt werden.

Die Filtervorrichtung 2 umfasst ein Gehäuse 4, welches einen Filterraum 6 begrenzt, der von dem zu reinigenden Gasstrom in einer durch einen Pfeil 8 gezeigten Strömungsrichtung durchströmt wird. Das Gehäuse 4 umfasst eine erste Stirnwand 10 und eine dieser gegenüberliegende zweite Stirnwand 12, zwischen denen sich eine Bodenwand 14, zwei Seitenwände 16 sowie eine Deckenwand erstrecken. Von dem Gehäuse 4 sind in den Figuren eine der Seitenwände 16 und die Deckenwand nicht gezeigt, um einen Einblick in den Filterraum 6 zu gewähren.

In der ersten Stirnwand 10 ist eine Einlassöffnung 18 vorhanden, welcher die zu reinigende Abluft über ein nicht eigens gezeigtes Leitungssystem zugeführt werden kann.

Die zu reinigende Abluft durchströmt den Filterraum 6 und wird dabei durch mehrere in Strömungsrichtung 8 hintereinander angeordnete Filterstufen geführt, um die Filtervorrichtung 2 schließlich als Reinluft über eine Auslassöffnung 20 zu verlassen, die in der Bodenwand 14 nahe der zweiten Stirnwand 12 des Gehäuses 4 vorhanden ist.

Die zweite Stirnwand 12 trägt ihrerseits ein Gebläse 22, durch welches ein Volumenstrom der Abluft zwischen der Einlassöffnung 18 und der Auslassöffnung 20 in Höhe von etwa 150.000 m³ pro Stunde durch den Filterraum 6 hindurch aufrechterhalten wird. Die aus der Auslassöffnung 20 austretende Reinluft wird dann in einem Kreislauf und gegebenenfalls nach einer weiteren Konditionierung, wie beispielsweise einer Befeuchtung, wieder ihrer ursprünglichen Bestimmung zugeführt.

Beim vorliegenden Ausführungsbeispiel umfassen die angesprochenen Filterstufen in Strömungsrichtung 8 eine erste und eine zweiten Filtereinheit 24, 26, einen Lufterhitzer 28, einen Luftkühler 30 sowie eine dritte Filtereinheit 32. Die Filtereinheiten 24, 26 und 32 können beispielsweise als Lamellenfilterwände ausgebildet sein. Derartige Filterstufen und ihre Anordnung sind aus dem Stand der Technik bekannt und vorliegend nicht weiter von Interesse, weshalb hierauf nicht weiter eingegangen wird.

Durch die Filterstufen 24 bis 32 jedenfalls wird die Abluft von Verunreinigungen mit Ausnahme von gasförmigen, insbesondere von flüchtigen organischen Verbindungen, befreit, mit welchen die Abluft beladen ist. Solche flüchtigen organischen Verbindungen werden allgemein mit der Abkürzung VOC bezeichnet, die sich aus dem englischen "volatile organic compound" ableitet.

Um die Abluft auch von diesen VOCs zu befreien, ist als letzte Filterstufe eine Adsorptionsfiltereinrichtung 34 vorhanden.

Die Adsorptionsfiltereinrichtung 34 umfasst eine Vielzahl von Filtereinheiten 36, von denen nur einige mit einem Bezugszeichen versehen sind. Jede Filtereinheit 36 hat ein eigenes Gehäuse 38, welches als eine Art Rahmen ausgebildet ist, in dem ein Filtermedium 40 angeordnet ist.

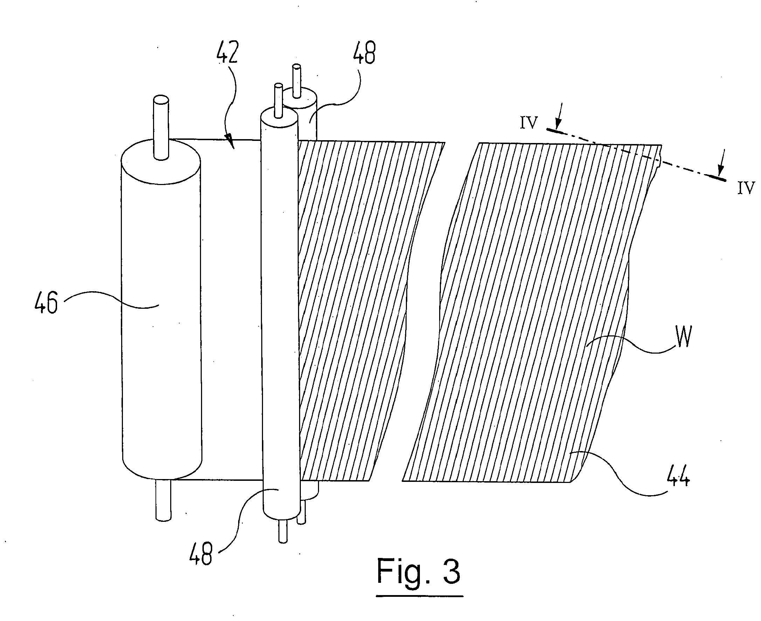

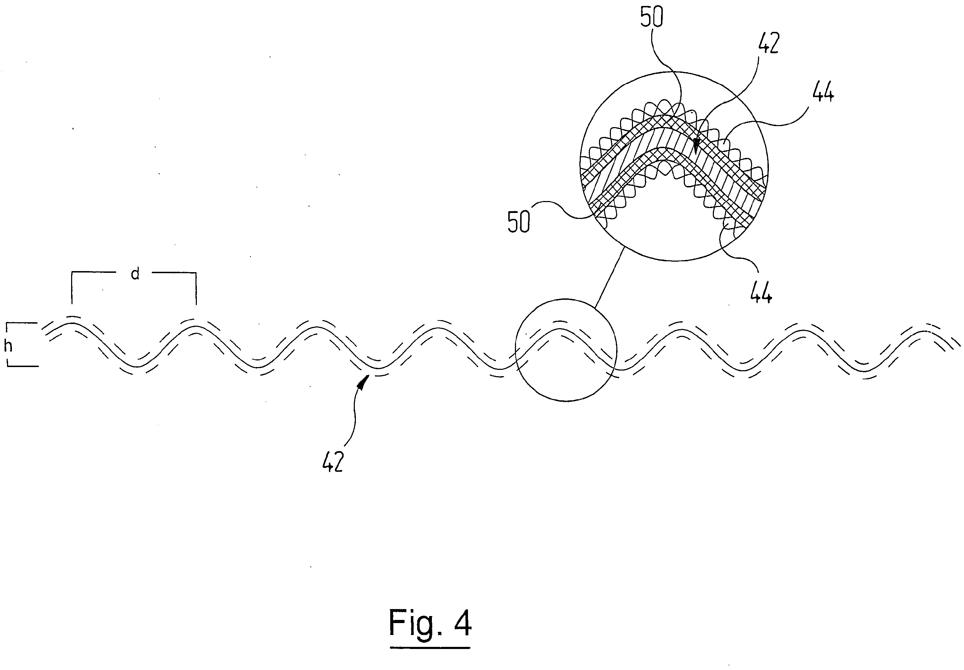

Das Filtermedium 40 ist beim vorliegenden Ausführungsbeispiel ein durch mehrfache Faltung zu einem Filterblock 41 geformtes Metallband, welches in Form einer Aluminiumfolie 42 vorliegt. Diese Aluminiumfolie 42 dient als Trägersubstrat für ein Adsorbens 44 (vgl. Figuren 3 und 4) und ist mit diesem beschichtet. Als solches Adsorbens 44 ist beispielsweise das Harz-Adsorbens Dowex^{®} Optipore^{®} V493 der Dow Water & Process Solutions, USA, geeignet.

Beim vorliegenden Ausführungsbeispiel ist das Filtermedium 40 beispielsweise als Filterblock 41 mit Kantenlängen LxHxT von 600mm x 300mm x 400mm ausgebildet.

Zur Herstellung dieses Filtermediums 40 wird Aluminiumfolie 42 mit einer Dicke von etwa 60 µm in vertikaler Ausrichtung von einer Rolle 46 (siehe Figur 3) abgewickelt, deren Drehachse vertikal verläuft, und durch Prägewalzen 48 mit einer um 15° zur Vertikalen geneigten Wellenstruktur W versehen. Dies ist in Figur 3 schematisch gezeigt. Das Wellenprofil der so geprägten Aluminiumfolie 42 ist in Figur 4 im Querschnitt gezeigt. Der Abstand d zwischen zwei Wellenbergen bzw. Wellentälern beträgt ca. 5 mm, die Höhe h der Wellenstruktur W beträgt etwa 3 mm.

In einem Abstand von 600mm wird die Aluminiumfolie 42 quer zu ihrer Wickelrichtung mit einer Perforierung versehen oder die Prägung durch die Prägewalzen 46 in einem kleinen Bereich ausgesetzt, in welchen die Aluminiumfolie 42 in einem späteren Vorgang perforiert wird. Entlang dieser Perforierung kann die Aluminiumfolie 42 dann leichter gefaltet werden als ohne Perforierung. Gegebenenfalls kann jedoch auch auf die Perforierung verzichtet werden.

Nach dem Prägevorgang wird die Aluminiumfolie auf beiden Seiten mit einem Klebstoff 50 (siehe Figur 4) mit einem Flächengewicht von etwa 90g/m² versehen, auf welchen dann das Adsorbens 44, z.B. das oben genannte Harz-Adsorbens Dowex^{®} Optipore^{®} V493 aufgetragen wird. Das Adsorbens 44 wird hierbei mit einem Flächengewicht zwischen 140 und 170 g/m² aufgebracht.

Gegebenenfalls erfolgt das Auftragen des Adsorbens 44 zweimal oder häufiger, um sicherzustellen, dass beim ersten oder einem vorhergehenden Beschichtungsvorgang möglicherweise verbliebene unbeschichtete Bereiche ebenfalls mit Adsorbens 44 bedeckt sind.

Sowohl der Klebstoff 50 als auch das Adsorbens 44 können mit herkömmlichen Sprühtechniken auf die Aluminiumfolie 42 aufgebracht werden, die allgemein bekannt sind und daher keiner weiteren Erläuterung bedürfen.

Überschüssiges Adsorbens 44, welches nicht an der Aluminiumfolie 42 haftet, fällt nach unten und kann dort aufgefangen und dem Beschichtungsvorgang in einem Kreislauf wieder zugeführt werden.

Nachdem der Klebstoff 50 dann abhängig von seiner Beschaffenheit unter Wärme- und/oder Strahlungseinwirkung getrocknet oder gehärtet wurde, wird die Aluminiumfolie 42, die nun auf ihren beiden Flächen Adsorbens 44 trägt, an den Perforierungen zu dem oben beschriebenen Filterblock 41 gefaltet.

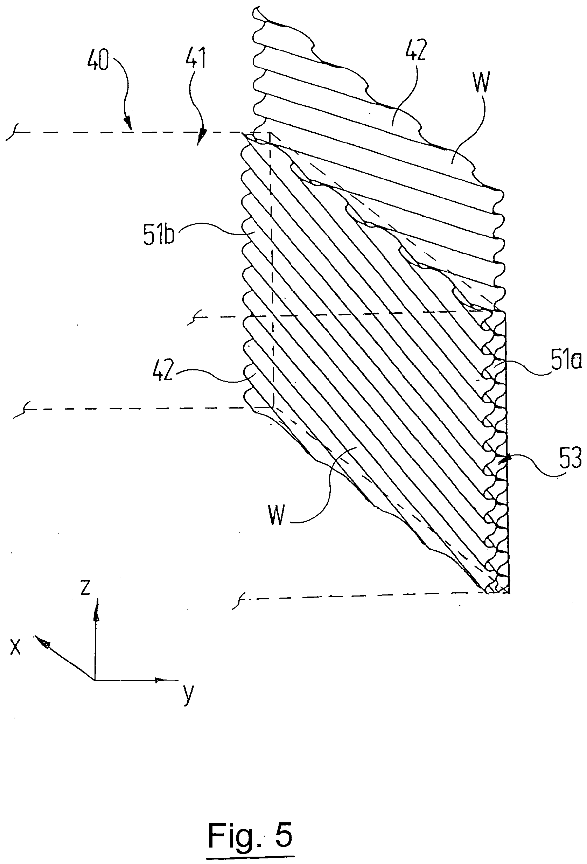

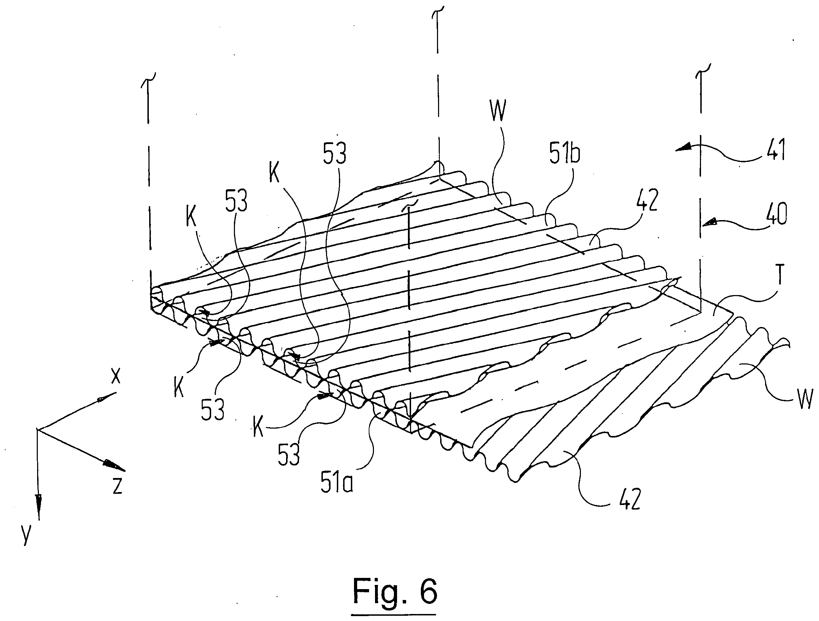

In den Figuren 5 und 6 ist jeweils ein solches durch Faltung der gewellten Aluminiumfolie 42 erzeugtes Filtermedium 40 in Form eines Filterblocks 41 zu erkennen, dessen Begrenzungen nur teilweise und gestrichelt gezeigt sind. Zu Veranschaulichung sind dabei nur jeweils zwei Lagen 51a, 51b der Vielzahl von Lagen 51 aus der Aluminiumfolie 42 gezeigt. Die Figuren 5 und 6 zeigen den Filterblock 41 in zwei Orientierungen, die er einnehmen kann, wenn er in der Adsorptionsfiltereinrichtung 34 angeordnet ist. Das zur Erläuterung in den Figuren 5 und 6 gezeigte Koordinatensystem sei drehfest mit dem Filterblock 41 verbunden.

Wenn der Filterblock 41 im Betrieb der Filtervorrichtung 2 in der Filterwand 52 angeordnet ist, wie es in den Figuren 5 und 6 gezeigt ist, ist die x-Richtung diejenige Richtung, in welcher der Filterblock 41 von der zu reinigenden Luft durchströmt wird. Die x-Richtung verläuft dann somit parallel zur Strömungsrichtung 8.

Bei der in Figur 5 gezeigten Orientierung weist die z-Richtung senkrecht nach oben und die y-Richtung in Strömungsrichtung 8 gesehen nach rechts, wobei die einzelnen Lagen 51 des Filtermediums 40, von denen nur die Lagen 51a, 51b gezeigt sind, vertikal angeordnet sind.

Dagegen weist die z-Richtung bei der in Figur 6 gezeigten Orientierung des Filterblocks 41 in Strömungsrichtung 8 gesehen nach rechts, wogegen die y-Richtung senkrecht nach unten weist. Die einzelnen Lagen 51 des Filtermediums 40 sind dort horizontal angeordnet.

Wie in den Figuren 5 und 6 zu erkennen ist, verlaufen die Wellenstrukturen W jeder Lage 51a, 51b auf Grund der Faltung zueinander versetzt und verschiedene Richtungen. Um dies zu verdeutlichen, ist in Figur 5 die unterste Lage 51a des Filtermediums 40 und in Figur 6 die dort ganz rechts gezeigte Lage 51a jeweils über die Außenkontur des Filterblocks 41 überstehend gezeigt.

Wenn die Filterblöcke 41 in der in Figur 6 gezeigten Orientierung verwendet werden sollen, ist aus weiter unten erläuterten Gründen zwischen benachbarten Lagen 51 aus gewellter Aluminiumfolie 42 jeweils eine durchgehende Trennschicht T vorhanden, von denen in Figur 6 lediglich eine einzige gezeigt ist. Auch die Trennschicht T ist zur Veranschaulichung über die Außenkontur des Filterblocks 41 überstehend gezeigt. Ein Filterblock 41 mit solchen Trennschichten T kann z.B. erhalten werden, indem die Prägung bei der Fertigung der Aluminiumfolie 42 in Abschnitten unterlassen wird, die doppelt so lang sind, wie geprägte Abschnitte. Beim Falten bilden dann jeweils zwei aufeinander liegende glatte Abschnitte der Aluminiumfolie 42 eine Trennschicht T, wodurch der Versatz der Wellenstrukturen W im Filtermedium erhalten bleibt.

Durch die Faltung und den Versatz der Wellenstrukturen W bildet sich ohne Trennschicht T zwischen zwei benachbarten Lagen 51 des Filtermediums 40 eine netzartige Kanal- oder Hohlraumstruktur aus; diese ist nicht eigens mit einem Bezugszeichen versehen. An den sich gegenüberliegenden und von außen zugänglichen Außenfläche jedes Filterblocks 41 ist jeweils zwischen zwei benachbarten Lagen 51 des Filtermediums 40 ein Zugang 53 (siehe Figur 5) ausgebildet, der sich insgesamt entlang der aufeinander liegenden Ränder der Lagen 51 des Filtermediums 40 erstreckt.

Wenn die Trennschichten T vorhanden sind, ist jeweils zwischen einer Trennschicht T und jeweils einer Welle der Aluminiumfolie 42 ein Kanal K gebildet, von denen in Figur 6 nur manche mit Bezugszeichen versehen sind. Jedem Kanal K sind in diesem Fall zwei Zugänge 53 zuzuordnen, die sich an den gegenüberliegenden Enden eines betrachteten Kanals K befinden.

In den Figuren 5 und 6 liegen die Ränder der gezeigten Lagen 51a, 51b beim Zugang 52 des Filtermediums 40 so aufeinander, dass ein Wellental der ersten Lage 51a einem Wellenberg der zweiten Lage 51b gegenüberliegt. Abhängig von der Faltung kann es hier jedoch auch zu einem Versatz kommen, so dass auch ein Wellental der ersten Lage 51a einem Wellenberg der zweiten Lage 51b gegenüberliegt. Zwischen diesen beiden Relativpositionen zweier benachbarter Lagen 51 sind auch alle Zwischenpositionen möglich.

Bei der ersten Orientierung des Filterblocks 51, wie sie in Figur 5 gezeigt ist, kann Luft auf diese Weise zwischen zwei benachbarten Lagen 51 des Filtermediums 40 in positive oder negative x-Richtung, also mit oder entgegen der Strömungsrichtung 8, durch das Filtermedium 40 hindurch strömen. Die Luft kann bei der ersten Orientierung jedoch außerdem nach oben oder unten, nicht jedoch nach links oder rechts strömen, da der Strömungsweg nach links oder rechts durch jeweils eine Lage 51 des Filtermediums 40 versperrt ist.

Bei der zweiten Orientierung des Filterblocks 51, wie sie in Figur 6 gezeigt ist, kann Luft zwischen einer Lage 51 und einer Trennschicht T ebenfalls in positive oder negative x-Richtung, also mit oder entgegen der Strömungsrichtung 8, durch das Filtermedium 40 hindurch strömen. Die Luft kann jedoch nicht nach oben oder unten strömen, da der Strömungsweg nun in diese Richtungen durch jeweils eine Lage 51 des Filtermediums 40 bzw. durch die Trennschicht T versperrt ist. Außerdem kann Luft nur durch die Kanäle K strömen; ein Strömen der Luft nach links und rechts aus den Kanälen K heraus ist nicht möglich.

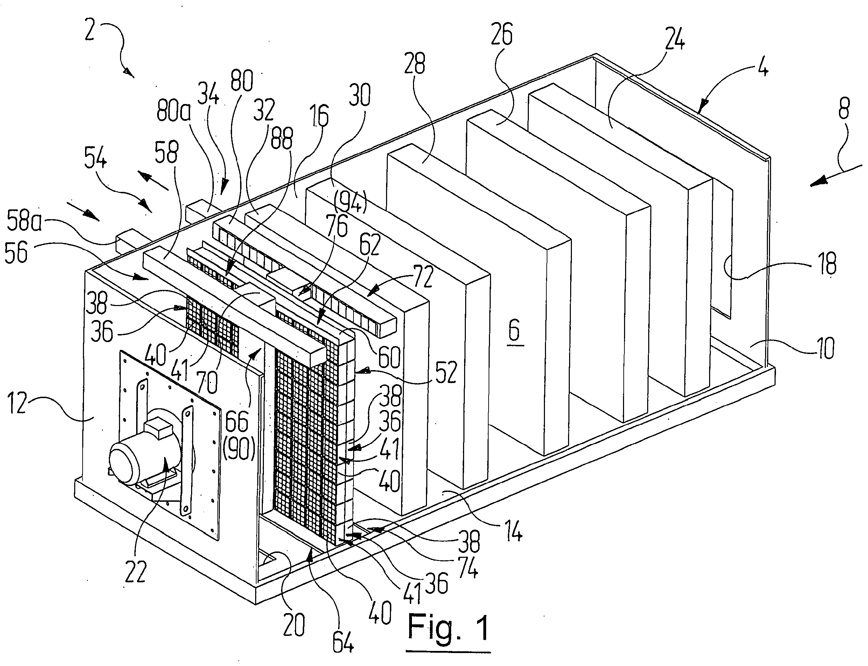

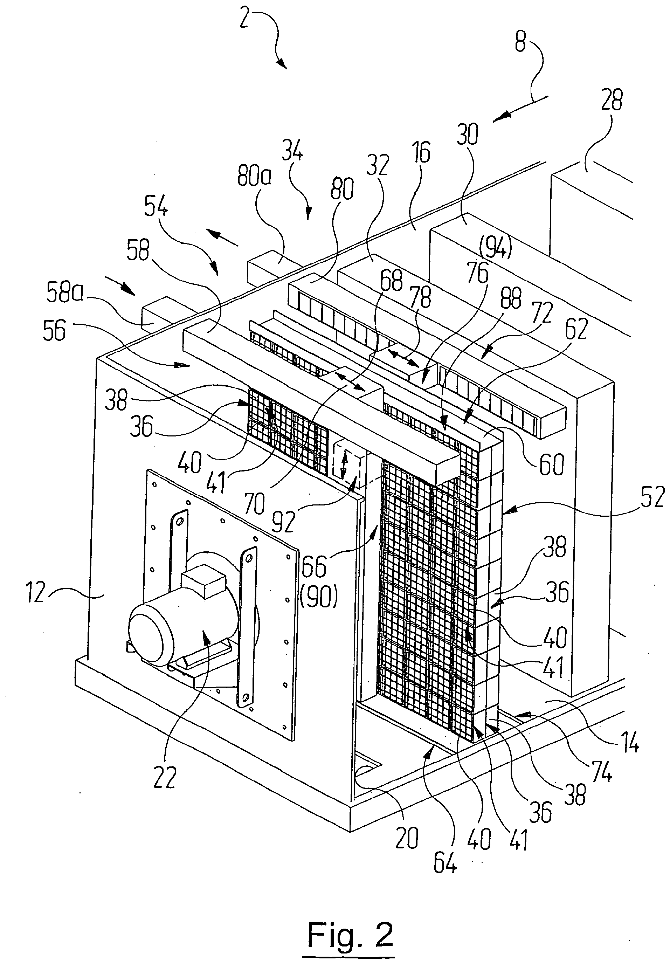

In den Figuren 1 und 2 ist zu erkennen, dass die Filtereinheiten 36 gemeinsam eine Filterwand 52 bilden und beim vorliegenden Ausführungsbeispiel lückenlos in einer 10x10-Matrix auf- und aneinander gestapelt sind, so dass die Filterwand 52 von dem Gasstrom durchströmt wird, welcher bereits die der Adsorptionsfiltereinrichtung 34 und deren Filterwand 52 vorgelagerten Filterstufen 24 bis 32 passiert hat. Die Dimensionen der Filtervorrichtung 2 sind dabei insgesamt so, dass die Adsorptionsfiltereinrichtung 34 mit der Filterwand 52 mit einer Anströmgeschwindigkeit von etwa 3 m/s von dem zu reinigenden Gasstrom angeströmt wird.

Das Adsorbens 44 und damit das Filtermedium 40 ist so beschaffen, dass es Verunreinigungen bei einer Adsorptionstemperatur in einem Adsorptionstemperaturbereich adsorbiert und bei einer Desorptionstemperatur in einem Desorptiontemperaturbereich wieder desorbiert. Beim vorliegenden Ausführungsbeispiel liegt der Adsorptionstemperaturbereich zwischen 0°C und 50°C und der Desorptiontemperaturbereich zwischen 90°C und 300°C. Wenn das Filtermedium 40 mit dem Adsorbens 44 einer Filtereinheit 36 also auf eine Desorptionstemperatur gebracht wird, werden aufgenommene Verunreinigungen von der Filtereinheit 36 wieder abgegeben und die Filtereinheit 36 dadurch gereinigt und regeneriert.

Dadurch, dass die Filterwand 52 der Adsorptionsfiltereinheit 34 aus einzelnen Filtereinheiten 36 mit jeweils einem eigenen Gehäuse 38 gebildet ist, können nun ein oder mehrere bestimmte Filtereinheiten 36 gereinigt werden, ohne dass hierzu die Adsorptionsfiltereinrichtung 34 als Ganzes den Betrieb einstellen muss. So ist jede Filtereinheit 36 der Adsorptionsfiltereinrichtung 34 eine regenerative Adsorptionsfiltereinheit.

Für deren Reinigung und Regeneration umfasst die Filtervorrichtung 2 eine Regenerationseinrichtung 54, mittels welcher ein oder mehrere Filtereinheiten 36 unabhängig von anderen Filtereinheiten 36 regeneriert werden können, indem zu reinigendes Filtermedium 40 in einen Zustand gebracht wird, in welchem aufgenommene Verunreinigungen desorbiert werden.

Zu diesem Zweck werden zu reinigende Filtereinheiten 36 mit einem Spülfluid in Form von konditionierter Desorptionsluft durchströmt. Hierzu umfasst die Regenerationseinrichtung 54 eine Desorptionsluft-Zuführeinheit 56, welche auf der dem Gebläse 22 der Filtervorrichtung 2 zugewandten Seite der Filterwand 52 angeordnet ist, sowie eine Desorptionsluft-Abführeinheit 58, die auf der von dem Gebläse 22 abliegenden Seite der Filterwand 52 angeordnet ist.

Die Desorptionsluft-Zuführeinheit 56 umfasst eine Zuführleitung 58 für Desorptionsluft, welche horizontal und senkrecht zur Strömungsrichtung 8 parallel zur Filterwand 52 verläuft und einen Anschluss 58a umfasst, der sich außerhalb des Gehäuses 4 der Filtervorrichtung 2 befindet. Die Zuführleitung 58 ist benachbart zu dem oberen Rand 60 der Filterwand 52 der Adsorptionsfiltereinrichtung 34 angeordnet, welche dort eine horizontale obere Führungsschiene 62 trägt, die sich parallel zu der Zuführleitung 58 erstreckt.

Parallel zur oberen Führungsschiene 62 ist in der Bodenwand 14 des Gehäuses 4 der Filtervorrichtung 2 eine horizontale untere Führungsschiene 64 vorhanden, die auf der dem Gebläse 22 zugewandten Seite der Filterwand 52 angeordnet ist.

In den Führungsschienen 62 und 64 ist ein Luftauslassschlitten 66 verfahrbar gelagert, der einen vertikal verlaufenden Luftauslasskanal vorgibt und in horizontaler Richtung entlang der Filterwand 52 verfahren werden kann. Dies ist in Figur 2 durch den Doppelpfeil 68 veranschaulicht. Hierfür ist der Luftauslasskanal 66 mit einem nicht eigens gezeigten Antriebsmotor gekoppelt.

Das obere Ende 70 des Luftauslassschlittens 66 kommuniziert mit der Zuführleitung 58, so dass Desorptionsluft über den Luftauslassschlitten 66 in zu reinigendes Filtermedium 40 geleitet werden kann. Hierzu wird der Luftauslassschlitten 66 vor der Filterwand 52 in horizontaler Richtung verfahren.

Der Luftauslassschlitten 66 ist auf seiner der Filterwand 52 zugewandten Seite offen, so dass die Filterwand 52 über ihre gesamte Höhe mit Desorptionsluft beaufschlagt werden kann. Der Luftauslassschlitten 66 dient somit als Quelle für Desorptionsluft.

Beim vorliegenden Ausführungsbeispiel ist der Luftauslassschlitten 66 etwa so breit wie eine Filtereinheit 36, so dass er eine Spalte von Filtereinheiten 36 in der Matrix der Filterwand 52 abdecken kann.

Bevor die Desorptionsluft in die Zuführleitung 58 der Regenerationseinrichtung 54 eingespeist wird, wird sie konditioniert und dabei insbesondere getrocknet und auf eine Arbeitstemperatur erhitzt. Wenn die so konditionierte Desorptionsluft nun ein zu reinigendes Filtermedium 40 durchströmt, wird dieses mit dem Adsorbens 44 auf eine Desorptionstemperatur erwärmt. Die aufgenommenen Verunreinigungen werden von dem Adsorbens 44 wieder abgegeben und von der Desorptionsluft mitgerissen.

Um die nun mit Verunreinigungen belastete Desorptionsluft aus der Filtervorrichtung 2 abzuführen, umfasst die Regenerationseinrichtung 54 eine Desorptionsluft-Abführeinheit 72, welche baulich analog der Zuführeinheit 54 ausgestaltet ist, jedoch auf der von dem Gebläse 22 abliegenden Seite der Filterwand 52 angeordnet ist.

Dazu ist parallel zur oberen Führungsschiene 62 in der Bodenwand 14 des Gehäuses 4 der Filtervorrichtung 2 eine zweite horizontale untere Führungsschiene 74 vorhanden, die sich auf der von dem Gebläse 22 abliegenden Seite der Filterwand 52 befindet.

In der oberen Führungsschiene 62 an der Filterwand 52 und der zweiten unteren Führungsschiene 74 ist ein Luftauslassschlitten 76 verfahrbar gelagert, welcher einen vertikalen Luftauslasskanal vorgibt und in horizontaler Richtung entlang der Filterwand 52 verfahren werden kann, was in Figur 2 durch den Doppelpfeil 78 veranschaulicht ist. Der Lufteinlassschlitten 76 kommuniziert mit einer Abführleitung 80, die parallel zur Zuführleitung 58 auf gleichem Höhenniveau verläuft und durch die Seitenwand 16 der Filtervorrichtung 2 aus deren Gehäuse 4 hinaus zu einem Anschluss 80a führt. Der Luftauslassschlitten 76 ist in seinen Abmessungen komplementär zum Lufteinlassschlitten 66 ausgebildet.

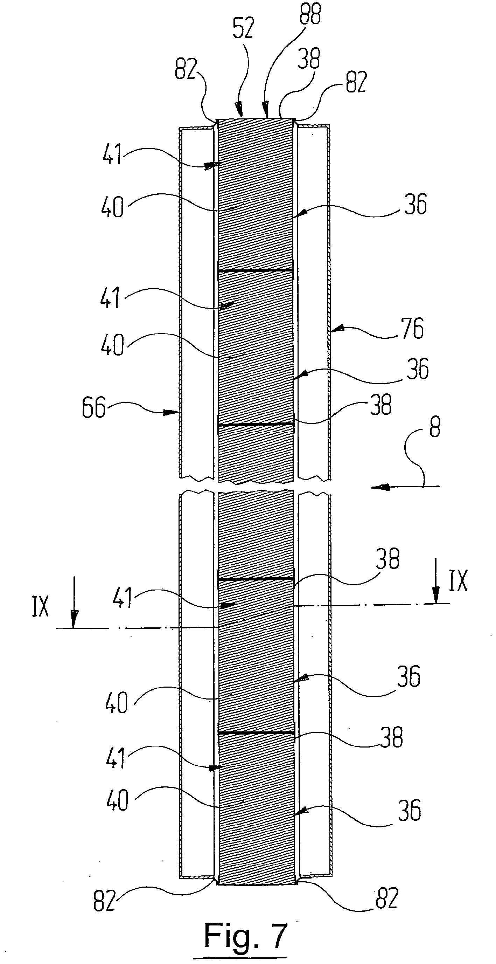

Figur 7 zeigt einen vertikalen Schnitt der Filterwand 52 mit dem Luftauslassschlitten 66 und dem Lufteinlassschlitten 76 der Regenerationseinrichtung 54. Dort werden Filterblöcke 41 ohne Trennschichten T verwendet, wobei die Filtereinheiten 36 so ausgerichtet sind, dass die Filterblöcke 41 die erste Orientierung gemäß Figur 5 einnehmen.

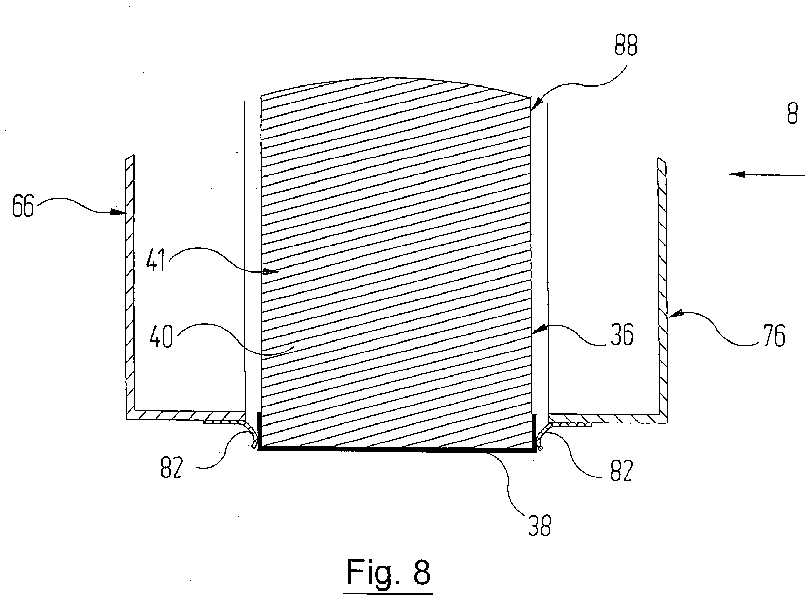

Wie zu erkennen ist, ist die der Filterwand 52 jeweils zugewandte offene Seite der beiden Schlitten 66 und 76 durch untere und obere horizontale Dichtlippen 82 gegen die Filterwand 52 abgedichtet. Die unteren Dichtlippen 82 des Lufteinlassschlittens 66 und des Luftauslassschlittens 76 sind in Figur 8 nochmals in vergrößerten Maßstab am unteren Bereich der Filterwand 52 gezeigt. Anhand Figur 8 ist ersichtlich, dass die unteren Dichtlippe 82 gegen den unteren Rand der Gehäuse 38 der Filtereinheiten 36 in der untersten Reihe der Filtereinheiten 36 in der Filterwand 52 abdichten. In entsprechender Weise dichten die oberen Dichtlippe 82 der Schlitten 66 und 76 gegen den oberen Rand der Gehäuse 38 der Filtereinheiten 36 in der obersten Reihe der Filtereinheiten 36 in der Filterwand 52 ab.

Auch in vertikaler Richtung ist eine solche Abdichtung erforderlich, diese fällt jedoch je nach Orientierung der Filtereinheiten 36 bzw. der Filterblöcke 41 in der Filterwand 52 unterschiedlich aus. Hierauf wird weiter unten nochmals eingegangen.

Über den Lufteinlassschlitten 76 kann Desorptionsluft, die zuvor die Filterwand 52 durchströmt und dabei von deren Filtermedium 40 desorbierte Verunreinigungen aufgenommen hat, aus der Filtervorrichtung 2 abgeführt werden, indem der Lufteinlassschlitten 76 in eine entsprechende Position hinter den zu reinigenden Wandabschnitt der Filterwand 52 gebracht wird, vor dem bereits der Luftauslassschlitten 70 der Desorptionsluft-Zuführeinheit 56 angeordnet ist. Hierzu wird der Luftauslassschlitten 76 in eine dafür erforderliche horizontale Position bewegt, wozu der Lufteinlassschlitten 76 ebenfalls mit einem nicht eigens gezeigten Antriebsmotor gekoppelt sind.

Wie oben beschrieben, können die Filterblöcke 41 bei der oben erläuterte Filtervorrichtung 2 nun abhängig von der Ausrichtung der Filtereinheiten 36 in der in Figur 5 gezeigten ersten Orientierung oder in der in Figur 6 gezeigten zweiten Orientierung verwendet werden.

Bei einem ersten Ausführungsbeispiel der Filtervorrichtung 2 sind also die Filtereinheiten 36 so in der Filterwand 52 angeordnet, dass die Filterblöcke 41 die in Figur 5 gezeigte erste Orientierung einnehmen und keine Trennschicht T zwischen den einzelnen Lagen 51 des Filtermediums 40 vorhanden sind. Die Zugänge 53 zwischen zwei benachbarten Lagen 51 des Filtermediums 40 einer Filtereinheit 36 verlaufen dann vertikal.

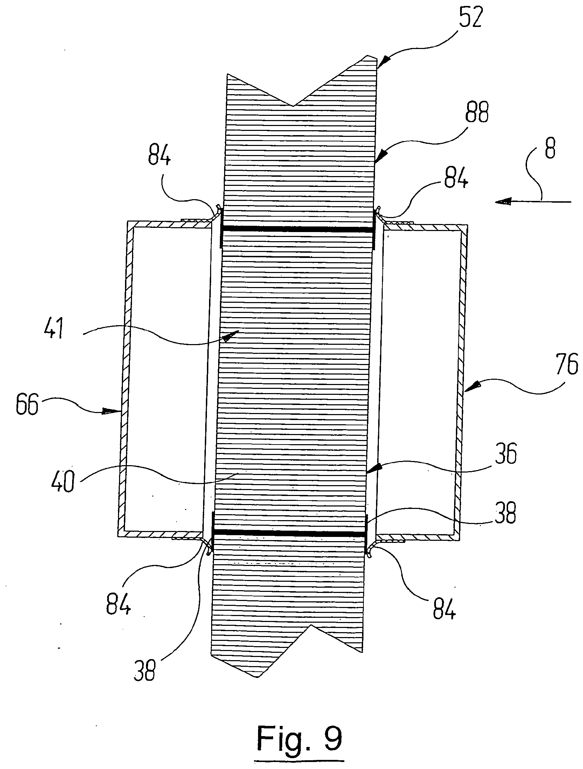

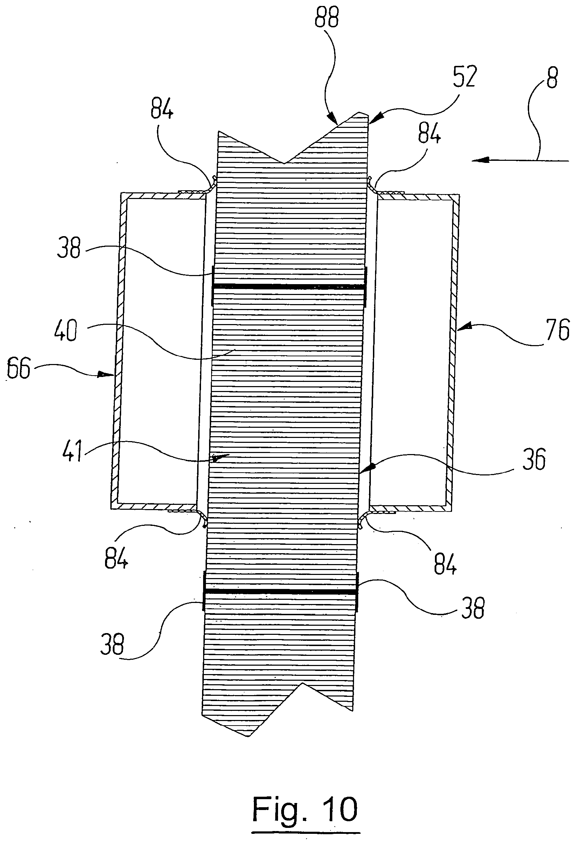

In den Figuren 9 und 10 sind entsprechend jeweils ein horizontaler Schnitt der Filterwand 52 und des Lufteinlassschlittens 66 sowie des Luftauslassschlittens 76 der Regenerationseinrichtung 54 gezeigt, wobei die Filterblöcke 41 ohne Trennschichten T ausgebildet sind und die in Figur 5 gezeigte erste Orientierung einnehmen.

Wie eingangs erwähnt, ist es besonders wichtig, dass keine mit Verunreinigungen beladene Desorptionsluft zur Reinluft gelangt, die bereits die Filterwand 52 und damit die Adsorptionsfiltereinrichtung 34 der Filtervorrichtung 2 passiert hat.

Um dies zu verhindern, umfassen der Lufteinlassschlitten 66 und der Luftauslassschlitten 76 seitliche vertikale Dichtlippen 84. Diese verlaufen zwischen den oberen und unteren Dichtlippen 82 und sind derart breit ausgebildet, dass sie wenigstens einen der vertikal verlaufenden Zugänge 53 der Filterblöcke 41 abdecken können. Dies ist in Figur 10 zu erkennen. Die Dichtlippen 84 sind damit verhältnismäßig schmal, was den Vorzug hat, dass sie nur eine verhältnismäßig geringe Fläche der Filterwand 52 abdecken, die dann nicht mehr als Filter für den zu reinigenden Gasstrom zur Verfügung steht.

Auf diese Weise ist über die gesamte Höhe der Filterwand 52 sichergestellt, dass keine mit Verunreinigungen beladene Desorptionsluft aus der Filterwand 52 an dem Lufteinlassschlitten 76 der Regenerationseinrichtung 54 vorbei strömen und zu Reinluft gelangen kann. Dies gilt auch, wenn die vertikalen Zugänge 53 zweier übereinander angeordneter Filterblöcke 51 in seitliche Richtung zueinander versetzt vorliegen sollten, wie es auf Grund von Toleranzen bei der Fertigung der Filtereinheiten 36 oder deren Anordnung in der Filterwand 52 vorkommen kann.

Der Desorptionsvorgang kann nun kontinuierlich erfolgen, indem dem Luftauslassschlitten 66 Desorptionsluft zugeführt und dieser zusammen mit dem auf der anderen Seite der Filterwand 52 positionierten Lufteinlassschlitten 76 in einer gleichförmigen Bewegung an der Filterwand 52 entlang gefahren wird.

In Figur 9 ist eine Phase dieser Bewegung gezeigt, in der die Schlitten 66 und 76 jeweils eine vertikale Spalte aus Filtereinheiten 36 abdecken. In Figur 10 ist eine Phase dieser Bewegung gezeigt, in der die Schlitten 66 und 76 einen Teilbereich von Filtereinheiten 36 einer ersten vertikalen Spalte aus Filtereinheiten 36 und einen Teilbereich von Filtereinheiten 36 einer benachbarten vertikalen Spalte aus Filtereinheiten 36 abdecken.

Bei einem zweiten Ausführungsbeispiel der Filtervorrichtung 2 sind die Filtereinheiten 36 so in der Filterwand 52 angeordnet, dass die Filterblöcke 41 die in Figur 6 gezeigte zweite Orientierung einnehmen. In diesem Fall umfassen die Filterblöcke 41 Trennschichten T und die entsprechenden Zugänge 53 der Kanäle K zwischen einer Lage 51 des Filtermediums 40 und einer Trennschicht T sind in horizontaler Richtung nebeneinander angeordnet.

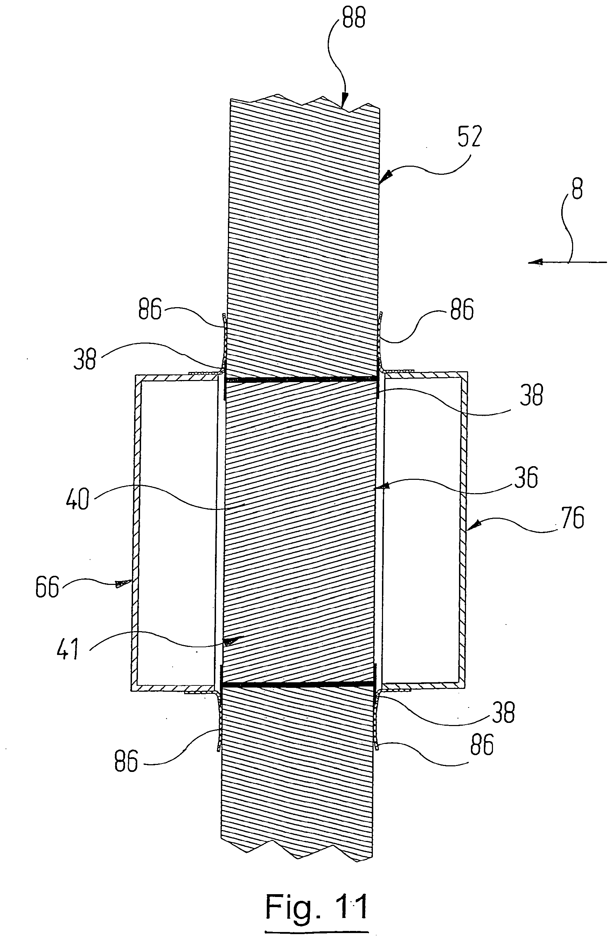

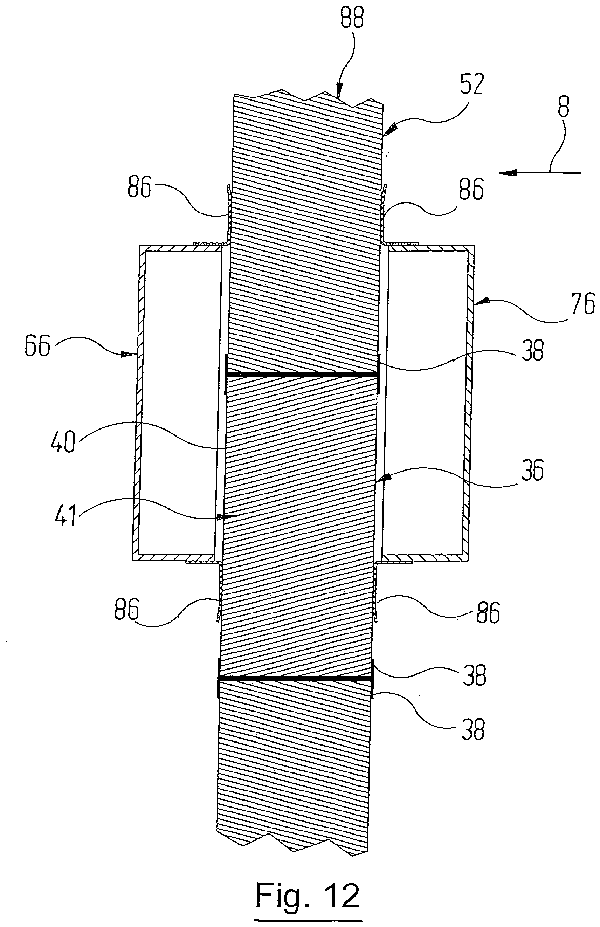

In den Figuren 11 und 12 sind entsprechend jeweils ein horizontaler Schnitt der Filterwand 52 und des Lufteinlassschlittens 66 sowie des Luftauslassschlittens 76 der Regenerationseinrichtung 54 gezeigt.

Auch in diesem Fall umfassen der Lufteinlassschlitten 66 und der Luftauslassschlitten 76 seitliche vertikale Dichtlippen. Diese sind mit dem Bezugszeichen 86 bezeichnet und verlaufen ebenfalls zwischen den oberen und unteren Dichtlippen 82 des jeweiligen Schlittens 66 oder 76.

Um bei der zweiten Orientierung der Filterblöcke 51 zu verhindern, dass keine mit Verunreinigungen beladene Desorptionsluft zur Reinluft gelangt, die bereits die Filterwand 52 und damit die Adsorptionsfiltereinrichtung 34 der Filtervorrichtung 2 passiert hat, müssen die Dichtlippen 86 jedoch breiter ausgebildet sein als die Dichtlippen 84 bei der ersten Orientierung der Filterblöcke 51.

Die Dichtlippen 86 sind derart breit ausgebildet, dass jeweils die auf den gegenüberliegenden Seiten des Filterblocks 41 befindlichen Zugänge 53 eines Kanals K abgedeckt ist, wie es anhand Figur 12 ersichtlich ist. Dort ist eine Phase des Regenerationsvorgangs gezeigt, in der die Schlitten 66 und 76 einen Teilbereich von Filtereinheiten 36 einer ersten vertikalen Spalte aus Filtereinheiten 36 und einen Teilbereich von Filtereinheiten 36 einer benachbarten vertikalen Spalte aus Filtereinheiten 36 abdecken.

Wenn bei der Orientierung der Filterblöcke 41 gemäß Figur 6 keine Trennschichten T vorhanden wären, könnte unabhängig von der Breite der Dichtlippen 86 über die oben angesprochene Kanal- oder Hohlraumstruktur zwischen zwei Lagen 51 des Filtermediums 40 Desorptionsluft seitlich an dem Lufteinlassschlitten 76 der Regenerationseinrichtung 54 vorbei zur Reinluft gelangen.

Dadurch, dass die Trennschichten T vorhanden sind, sind anstelle der netzartigen Kanal- und Hohlraumstruktur nur die einzelnen Kanäle K vorhanden, deren gegenüberliegende Zugänge 53 auf Grund der breiten Dichtlippen 86 sicher verschlossen werden können. So kann eine Kontamination der Reinluft durch Desorptionsluft zuverlässig verhindert werden, da Desorptionsluft von dem Luftauslassschlitten 66 über das durchströmte Filtermedium 40 zum Lufteinlassschlitten 76 gelangt und von dort über die Abführleitung 80 sicher abgeführt werden kann.

Durch die Kombination der Trennschichten T mit den breiteren Dichtlippen 86 ist auch bei einer Orientierung des Filtermediums 40 gemäß Figur 6 ist über die gesamte Höhe der Filterwand 52 sichergestellt, dass keine mit Verunreinigungen beladene Desorptionsluft aus der Filterwand 52 an dem Lufteinlassschlitten 76 der Regenerationseinrichtung 54 vorbei strömen und zu Reinluft gelangen kann.

Auch beim zweiten Ausführungsbeispiel kann der Desorptionsvorgang entsprechend kontinuierlich erfolgen, indem dem Luftauslassschlitten 66 Desorptionsluft zugeführt wird und dieser zusammen mit dem auf den anderen Seite der Filterwand 52 positionierten Lufteinlassschlitten 76 in einer gleichförmigen Bewegung an der Filterwand 52 entlang gefahren wird.

In einer Abwandlung können die Filterblöcke 51 auch in der Orientierung gemäß Figur 6 in der Filterwand 52 angeordnet sein und Trennschichten T umfassen und ein Luftauslass- und ein Lufteinlassschlitten 66 bzw. 76 der Regenerationseinrichtung 54 mit schmalen vertikalen Dichtlippen 84 verwendet werden. In diesem Fall kann der Desorptionsvorgang jedoch nur taktweise für jeweils eine vertikale Spalte aus Filtereinheiten 36 durchgeführt werden. Wenn die Desorptionsluft den Luftauslassschlitten 66 verlässt und durch das Filtermedium 40 zum Lufteinlassschlitten 76 strömt, müssen die jeweiligen Dichtlippen 84 dann jeweils auf den Seitenrändern der Gehäuse 38 anliegen, wie es in Figur 9 veranschaulicht ist.

Bei den oben beschriebenen Ausführungsbeispielen bilden jeweils diejenigen Filtereinheiten 36, die in einer gemeinsamen vertikalen Spalte der Filterwand 52 angeordnet sind, ein Filtermodul 88. Bei den oben beschriebenen Ausführungsbeispielen umfasst die Filterwand 52 somit zehn solcher Filtermodule 88, von denen in den Figuren 1 und 2 nur jeweils eines mit einem Bezugszeichen versehen ist.

Durch die Regenerationseinrichtung 54 kann somit ein erstes Filtermodul 88 unabhängig von einem zweiten Filtermodul 88, beispielsweise unabhängig von dem in einer horizontalen Richtung benachbarten Filtermodul 88, regeneriert werden.

Insbesondere kann die Filterwand 52 und können damit die Filtermodule 88 in einem kontinuierlichen Prozess einer Desorption unterworfen werden. Unter diesem kontinuierlichen Desorptionsprozess ist der Vorgang zu verstehen, wenn der Lufteinlassschlitten 66 und der Luftauslassschlitten 76 der Regenerationseinrichtung 54 in einer kontinuierlichen Bewegung entlang der Filterwand 52 bewegt werden. Wenn der Lufteinlassschlitten 66 und der Luftauslassschlitten 76 an einem Seitenrand der Filterwand 52 angekommen sind, werden sie wieder zum anderen Seitenrand zurückbewegt und die kontinuierliche Desorption kann wiederholt werden. Gegebenenfalls können Lufteinlassschlitten 66 und der Luftauslassschlitten 76 auch stets hin- und her bewegt werden, wobei immer Desorptionsluft von dem Luftauslassschlitten 66 abgegeben wird.

Wahlweise kann die Desorption der einzelnen Filtermodule 88 auch taktweise erfolgen. Dazu werden der Lufteinlassschlitten 66 und der Luftauslassschlitten 76 jeweils von einer Spalte von Filtereinheiten 36 zur nächsten bewegt. Die Desorptionsluft wird jedoch nur dann durch das Filtermedium 40 hindurch geleitet, wenn die Dichtlippen 84 bzw. 86 gegen die Gehäuse 38 der Filtereinheiten 36 und damit gegen das jeweils abgedeckte Filtermodul 88 abdichten.

Dadurch, dass jede Filtereinheit 36 ein eigenes Gehäuse 38 hat, hat insgesamt auch jedes Filtermodul 88 ein eigenes Gehäuse 38. So kann die Desorption der von dem Filtermedium 40 aufgenommenen Verunreinigungen effektiver bewirkt werden als es beispielsweise bei einer Filterwand möglich wäre, die genauso groß wie die Filterwand 52 ist, jedoch mehr oder minder einstückig aus Filtermedium gebildet ist.

Bei einer Abwandlung der Adsorptionsfiltereinrichtung 34 ist anstelle des Luftauslassschlittens 66 ein Führungsprofil 90 vorgesehen, welches in den Figuren 1 und 2 mit einem Bezugzeichen in Klammern gezeigt ist.

In dem Führungsprofil 90 ist dann als Desorptionsluft-Quelle ein Luftauslassschlitten 92 mit einer nicht eigens gezeigten Auslassöffnung vertikal verfahrbar, welcher derart dimensioniert ist, dass er ein Filtermedium 40 einer Filtereinheit 36 vollständig abdecken kann, wobei der Luftauslassschlitten 92 mit dem Gehäuse 38 der betreffenden Filtereinheit 36 gasdicht abschließt. Der Luftauslassschlitten 92 ist nur in Figur 2 und dort lediglich gestrichelt gezeigt.

Die Auslassöffnung des Luftauslassschlittens 92 ist der Filterwand 52 zugewandt und kommuniziert über nicht eigens gezeigte Leitungen mit der Zuführleitung 58, so dass Desorptionsluft über den Luftauslassschlitten 92 in eine zu reinigende Filtereinheit 36 geleitet werden kann. Hierzu wird der Luftauslassschlitten 92 in eine entsprechende Position vor dem zu reinigenden Filtermodul 36 gebracht, indem das Führungsprofil 90 in eine dafür erforderliche horizontale und der Luftauslassschlitten 92 in eine dafür erforderliche vertikale Position bewegt werden. Zu diesem Zweck sind das Führungsprofil 90 und der Luftauslassschlitten 92 mit hier nicht eigens gezeigten Antriebsmotoren gekoppelt.

In entsprechender Weise ist dann anstelle des Lufteinlassschlittens 76 ein zweites Führungsprofil 94 vorgesehen, welches in den Figuren 1 und 2 ebenfalls mit einem Bezugzeichen in Klammern versehen ist.

In dem Führungsprofil 94 ist nun ein in den Figuren nicht zu erkennender Lufteinlassschlitten vertikal verfahrbar, welcher wie der Luftauslassschlitten 92 der Desorptionsluft-Zuführeinheit 56 derart dimensioniert ist, dass er ein Filtermedium 40 einer Filtereinheit 36 vollständig abdecken kann, wobei der Lufteinlassschlitten mit dem Gehäuse 38 der betreffenden Filtereinheit 36 gasdicht abschließt.

Dieser Lufteinlassschlitten hat eine der Filterwand 52 zugewande Einlassöffnung, die über nicht eigens gezeigte Leitungen mit der Abführleitung 80 kommuniziert.

Über den Lufteinlassschlitten kann Desorptionsluft, die zuvor ein Filtermodul 36 durchströmt und dabei von dessen Filtermedium 40 desorbierte Verunreinigungen aufgenommen hat, aus der Filtervorrichtung abgeführt werden, indem der Lufteinlassschlitten in eine entsprechende Position hinter die zu reinigende Filtereinheit 36 gebracht wird, vor der bereits der Luftauslassschlitten 92 der Desorptionsluft-Zuführeinheit 56 angeordnet ist. Hierzu werden das Führungsprofil 94 in eine dafür erforderliche horizontale und der Lufteinlassschlitten in eine dafür erforderliche vertikale Position bewegt, wozu das Führungsprofil 94 und der Lufteinlassschlitten ebenfalls mit hier nicht eigens gezeigten Antriebsmotoren gekoppelt sind.

Bei dieser Abwandlung bildet jede Filtereinheit 36 mit seinem Gehäuse 38 ein separates Filtermodul, wobei ein erstes Filtermodul unabhängig von einem zweiten Filtermodul regeneriert werden kann.

Hierbei erfolgt der Desorptions-Regenerationsvorgang der Filterwand 52 durch die Regenerationseinrichtung 54 ebenfalls taktweise und für jedes Filtermodul 36 einzeln.

Hierzu werden der Luftauslassschlitten 92 der Desorptionsluft-Zuführeinheit 56 und der Lufteinlassschlitten (ohne Bezugszeichen) der Desorptionsluft-Abführeinheit 72 taktweise von einem durch eine Filtereinheit 36 gebildeten Filtermodul zum nächsten bewegt und jeweils ein Regenerationsvorgang vollzogen. Hierbei kann die Matrix aus Filtereinheiten bzw. Filtermodulen 36 in beliebiger Folge abgefahren werden, beispielsweise beginnend mit einem Eck-Filtermodul 36 entlang einer mäanderförmigen Bahn.

## Patentansprüche

1. Verfahren zur Reinigung eines in einem Kreislauf geführten Gasstroms, insbesondere eines Luftstroms, bei welchem der Gasstrom durch wenigstens eine Filterstufe (34) geführt wird, bei dem als wenigstens eine Filterstufe (34) eine Adsorptionsfiltereinrichtung (34) mit einem Filtermedium (40) verwendet wird, welches der Gasstrom durchströmt,
wobei
eine Filtervorrichtung (2) zum Filtern eines mit Verunreinigungen beladenen Gasstroms verwendet wird, und
a) eine ein Filtermedium (40) umfassende Adsorptionsfiltereinrichtung (34) von dem Gasstrom derart durchströmt wird, dass der Gasstrom mit Filtermedium (40) in Kontakt kommt, wobei das Filtermedium (40) Verunreinigungen bei einer Adsorptionstemperatur in einem Adsorptionstemperaturbereich adsorbiert und bei einer Desorptionstemperatur in einem Desorptiontemperaturbereich wieder desorbiert;
b) mittels wenigstens einer Regenerationseinrichtung (54) Filtermedium (40) auf eine Desorptionstemperatur gebracht wird, so dass das Filtermedium (40) von zuvor adsorbierten Verunreinigungen befreit wird;
wobei
c) die Adsorptionsfiltereinrichtung (34) wenigstens ein erstes Filtermodul (88; 36) und ein zweites Filtermodul (88; 36) mit jeweils einem eigenen Modulgehäuse (38) umfasst, in welchen jeweils Filtermedium (40) vorliegt und welche jeweils von dem Gasstrom durchströmt werden, wobei jedes Filtermodul (36; 88) eine Filtereinheit (36) ist oder mehrere Filtereinheiten (36), die in einer gemeinsamen vertikalen Spalte angeordnet sind, umfasst, wobei die Filtereinheiten (36) ein eigenes Gehäuse (38) haben, in dem das Filtermedium (40) angeordnet ist, und zu einer Filterwand (52) auf- und aneinander gestapelt werden;
d) die Regenerationseinrichtung (54) derart eingerichtet ist, dass das erste Filtermodul (88; 36) unabhängig von dem zweiten Filtermodul (88; 36) regeneriert wird;
e) die Regenerationseinheit (54) eine Desorptionsfluid-Zuführeinheit (56) und eine Desorptionsfluid-Abführeinheit (72) umfasst, welche derart auf zwei Seiten eines Filtermoduls (88; 36) positioniert werden, dass dieses zumindest bereichsweise von Desorptionsfluid durchströmt wird;
f) die Desorptionsfluid-Zuführeinheit (56) einen verfahrbaren Desorptionsfluid-Auslassschlitten (66; 92) und die Desorptionsfluid-Abführeinheit (72) einen verfahrbaren Desorptionsfluid-Einlassschlitten (76) umfasst, welche derart auf gegenüberliegenden Seiten eines Filtermoduls (88; 36) positioniert werden, dass Desorptionsfluid vom Desorptionsfluid-Auslassschlitten (66; 92) durch das Filtermodul (88; 36) zum Desorptionsfluid-Einlassschlitten (76) strömt.

2. Verfahren nach Anspruch 1, **dadurch gekennzeichnet, dass** die Filtermodule (88; 36) mittels der Regenerationseinheit (54) von einem Desorptionsfluid durchströmt werden.

3. Verfahren nach Anspruch 1 oder 2, **dadurch gekennzeichnet, dass** das Desorptionsfluid konditionierte Luft ist, welche eine Temperatur hat, die ausreicht, um das Filtermedium (40) auf Desorptionstemperatur zu bringen..

4. Verfahren nach einem der Ansprüche 1 bis 3, **dadurch gekennzeichnet, dass** das Filtermedium (40) ein Trägersubstrat (42) umfasst, welches mit einem Adsorbens (44) beschichtet ist.

5. Verfahren nach Anspruch 4, **dadurch gekennzeichnet, dass** das Trägersubstrat (42) band- oder folienartig ist.

6. Verfahren nach Anspruch 5, **dadurch gekennzeichnet, dass** das Trägersubstrat (42) aus einem Metall, insbesondere aus Aluminium, ist.

7. Verfahren nach Anspruch 5 oder 6, **dadurch gekennzeichnet, dass** das Trägersubstrat (42) eine Wellenstruktur (W) aufweist.

8. Verfahren nach Anspruch 7, **dadurch gekennzeichnet, dass** Filtermedium (40) in Form von wenigstens einem Filterblock (41) vorliegt, der eine Vielzahl benachbarter Lagen (51) aus dem Trägersubstrat (42) umfasst.

9. Verfahren nach Anspruch 8, **dadurch gekennzeichnet, dass** wenigstens ein Filterblock (41) in einer Orientierung von einem Filtermodul (88; 36) umfasst ist, bei der die Lagen (51) vertikal angeordnet sind.

10. Verfahren nach Anspruch 8 oder 9, **dadurch gekennzeichnet, dass** wenigstens ein Filterblock (41) in einer Orientierung von einem Filtermodul (88; 36) umfasst ist, bei der die Lagen (51) horizontal angeordnet sind.

11. Verfahren nach Anspruch 10, dass bei dem Filterblock (41) durchgehende Trennschichten (T) zwischen den Lagen (51) aus dem Trägersubstrat (42) angeordnet sind.

## Claims

1. Method for cleaning a gas stream, in particular an air stream, guided in a circuit, in which the gas stream is guided through at least one filter stage (34), in which use is made of an adsorption filter device (34) with a filter medium (40) through which the gas stream flows as at least one filter stage (34),
wherein
use is made of a filter apparatus (2) for filtering a gas stream laden with impurities, and
a) an adsorption filter device (34) comprising a filter medium (40) is flowed through by the gas stream in such a way that the gas stream comes into contact with filter medium (40), wherein the filter medium (40) adsorbs impurities at an adsorption temperature in an adsorption temperature range and desorbs impurities again at a desorption temperature in a desorption temperature range;
b) filter medium (40), by means of at least one regeneration device (54), is brought to a desorption temperature, so that the filter medium (40) is freed of previously adsorbed impurities;
wherein
c) the adsorption filter device (34) comprises at least one first filter module (88; 36) and one second filter module (88; 36), in each case having its own module housing (38), in which filter medium (40) is present in each case and which are in each case flowed through by the gas stream, wherein each filter module (36; 88) is a filter unit (36) or comprises multiple filter units (36) which are arranged in a common vertical column, wherein the filter units (36) have their own housing (38), in which the filter medium (40) is arranged, and are stacked one on the other and one against the other to form a filter wall (52);
d) the regeneration device (54) is configured in such a way that the first filter module (88; 36) is regenerated independently of the second filter module (88; 36);
e) the regeneration unit (54) comprises a desorption-fluid feed unit (56) and a desorption-fluid discharge unit (72) which are positioned on two sides of a filter module (88; 36) in such a way that the latter is flowed through at least regionally by desorption fluid;
f) the desorption-fluid feed unit (56) comprises a movable desorption-fluid outlet carriage (66; 92) and the desorption-fluid discharge unit (72) comprises a movable desorption-fluid inlet carriage (76), said carriages being positioned on opposite sides of a filter module (88; 36) in such a way that desorption fluid flows from the desorption-fluid outlet carriage (66; 92) to the desorption-fluid inlet carriage (76) through the filter module (88; 36).

2. Method according to Claim 1, **characterized in that** the filter modules (88; 36) are flowed through by a desorption fluid by means of the regeneration unit (54) .

3. Method according to Claim 1 or 2, **characterized in that** the desorption fluid is conditioned air having a temperature which is sufficient for bringing the filter medium (40) to desorption temperature.

4. Method according to one of Claims 1 to 3, **characterized in that** the filter medium (40) comprises a support substrate (42) which is coated with an adsorbent (44).

5. Method according to Claim 4, **characterized in that** the support substrate (42) is of strip-like or foil-like form.

6. Method according to Claim 5, **characterized in that** the support substrate (42) is composed of a metal, in particular of aluminium.

7. Method according to Claim 5 or 6, **characterized in that** the support substrate (42) has an undulating structure (W).

8. Method according to Claim 7, **characterized in that** the filter medium (40) is present in the form of at least one filter block (41) which comprises a multiplicity of adjacent plies (51) of the support substrate (42).

9. Method according to Claim 8, **characterized in that** at least one filter block (41) is comprised in an orientation of a filter module (88; 36) in which the plies (51) are arranged vertically.

10. Method according to Claim 8 or 9, **characterized in that** at least one filter block (41) is comprised in an orientation of a filter module (88; 36) in which the plies (51) are arranged horizontally.

11. Method according to Claim 10, that, at the filter block (41), continuous separating layers (T) are arranged between the layers (51) of the support substrate (42).

## Revendications

1. Procédé d'épuration d'un flux gazeux, en particulier d'un courant d'air guidé en circuit fermé, dans lequel le flux gazeux est guidé à travers au moins un étage de filtration (34) et dans lequel il est fait usage, en tant qu'étage de filtration (34) à présence minimale, d'un appareil (34) de filtration par adsorption qui est muni d'un agent filtrant (40) parcouru par ledit flux gazeux,
sachant
qu'un dispositif de filtration (2) est utilisé pour filtrer un flux gazeux chargé d'impuretés, et
a) qu'un appareil (34) de filtration par adsorption, incluant un agent filtrant (40), est parcouru par le flux gazeux de façon telle que ledit flux gazeux entre en contact avec de l'agent filtrant (40), lequel agent filtrant (40) adsorbe des impuretés à une température d'adsorption située dans une plage de températures d'adsorption, et les désorbe de nouveau à une température de désorption située dans une plage de températures de désorption ;
b) que de l'agent filtrant (40) est porté à une température de désorption, à l'aide d'au moins un appareil de régénération (54), de telle manière que ledit agent filtrant (40) soit débarrassé d'impuretés adsorbées à un stade antérieur ;
sachant que
c) l'appareil (34) de filtration par adsorption comprend au moins un premier module de filtration (88 ; 36) et un second module de filtration (88 ; 36) qui sont respectivement dotés d'un propre boîtier (38), dans lesquels de l'agent filtrant (40) est logé à chaque fois, et qui sont parcourus à chaque fois par le flux gazeux, chaque module de filtration (36 ; 88) constituant une unité de filtration (36), ou incluant plusieurs unités de filtration (36) disposées dans une colonne verticale commune, lesquelles unités de filtration (36) sont pourvues d'un propre boîtier (38) dans lequel ledit agent filtrant (40) est logé, et sont regroupées en superposition et en juxtaposition pour former une paroi filtrante (52) ;
d) l'appareil de régénération (54) est agencé de telle sorte que ledit premier module de filtration (88 ; 36) soit régénéré indépendamment dudit second module de filtration (88 ; 36) ;
e) l'unité de régénération (54) est munie d'une unité (56) d'amenée de fluide de désorption et d'une unité (72) d'évacuation de fluide de désorption mises en place, sur deux côtés d'un module de filtration (88 ; 36), de façon telle que ce dernier soit parcouru, au moins par zones, par du fluide de désorption ;
f) ladite unité (56) d'amenée de fluide de désorption et ladite unité (72) d'évacuation de fluide de désorption sont équipées, respectivement, d'un chariot mobile (66 ; 92) de sortie de fluide de désorption et d'un chariot mobile (76) d'admission de fluide de désorption implantés, sur des côtés opposés d'un module de filtration (88 ; 36), de façon telle que du fluide de désorption s'écoule, en parcourant ledit module de filtration (88 ; 36), vers ledit chariot (76) d'admission de fluide de désorption à partir dudit chariot (66 ; 92) de sortie de fluide de désorption.

2. Procédé selon la revendication 1, **caractérisé par le fait que** les modules de filtration (88 ; 36) sont parcourus par un fluide de désorption au moyen de l'unité de régénération (54).

3. Procédé selon la revendication 1 ou 2, **caractérisé par le fait que** le fluide de désorption est de l'air conditionné présentant une température suffisante pour porter l'agent filtrant (40) à une température de désorption.

4. Procédé selon l'une des revendications 1 à 3, **caractérisé par le fait que** l'agent filtrant (40) inclut un substrat porteur (42) revêtu d'une matière absorbante (44).

5. Procédé selon la revendication 4, **caractérisé par le fait que** le substrat porteur (42) est du type ruban ou film.

6. Procédé selon la revendication 5, **caractérisé par le fait que** le substrat porteur (42) consiste en un métal, notamment en de l'aluminium.

7. Procédé selon la revendication 5 ou 6, **caractérisé par le fait que** le substrat porteur (42) possède une structure ondulée (W).

8. Procédé selon la revendication 7, **caractérisé par le fait que** de l'agent filtrant (40) se présente sous la forme d'au moins un bloc filtrant (41) comprenant une multiplicité de couches voisines (51) constituées par le substrat porteur (42).

9. Procédé selon la revendication 8, **caractérisé par le fait qu'**au moins un bloc filtrant (41) est englobé, dans un module de filtration (88 ; 36), suivant une orientation dans laquelle les couches (51) sont disposées verticalement.

10. Procédé selon la revendication 8 ou 9, **caractérisé par le fait qu'**au moins un bloc filtrant (41) est englobé, dans un module de filtration (88 ; 36), suivant une orientation dans laquelle les couches (51) sont disposées horizontalement.

11. Procédé selon la revendication 10, **caractérisé par le fait que** des couches séparatrices (T) ininterrompues sont interposées, dans le bloc filtrant (41), entre les couches (51) constituées par le substrat porteur (42).
